# EUROPEAN PATENT APPLICATION

(11) **EP 4 528 533 A1**
(43) Date of publication of application: **26.03.2025**
(21) Application number: 24162109.3
(22) Date of filing: 07.03.2024
(51) Int. Cl.: G06F 16/242, G06F 16/33

(54) **ITERATIVE NATURAL LANGUAGE-BASED DATA PIPELINE GENERATIONS AND PROTOTYPING**

(30) Priority: 19.09.2023 US 202363539180 P
(71) Applicant: Palantir Technologies Inc., Denver, CO 80202 (US)
(72) Inventor: ISAACSON, Zachary, Denver, Colorado 80202 (US); AGRAWAL, Akshay, Denver, Colorado 80202 (US); GILMORE, Rowan, Denver, Colorado 80202 (US); KASAR, Rohith, Denver, Colorado 80202 (US); BRESNAHAN, Leslie, Denver, Colorado 80202 (US)
(74) Representative: Derry, Paul Stefan

(57) **Abstract**

At least some embodiments of the present disclosure are related to methods and systems for evaluating, generating, and/or prototyping data pipelines. In certain embodiments, a system is configured to perform operations include: receiving an input dataset, the input dataset including a data schema; generating a first prompt based on the input dataset and a first prompt structure having one or more text strings and one or more blanks; providing the first prompt to a language model; receiving a use case generated by the language model for the input dataset, the use case including a description of how to use the input dataset; generating a data pipeline based on the use case; and applying the data pipeline to the input dataset to generate an output dataset.

## Description

### CROSS REFERENCE TO RELATED APPLICATION

This application claims priority to U.S. Provisional Application No. 63/539,180, filed September 19, 2023.

### TECHNICAL FIELD

Certain embodiments of the present disclosure are directed to systems and methods associated with data pipelines. More particularly, some embodiments of the present disclosure provide systems and methods for evaluating, generating, and/or prototyping data pipelines.

### BACKGROUND

Users are becoming more comfortable prompting large language models ("LLMs") which are a type of artificial intelligence ("AI") models to solve complex problems that are often technical, specific, and require creative specificity in the answer. Users are also becoming more comfortable prompting the LLM in an iterative way, such as pointing out a mistake or missed context in a previous LLM response. The LLM, given its own previous response(s) and a new user prompt context, is able to re-generate a response that is often more accurate or applicable with the new context in mind.

Hence it is highly desirable to improve the techniques for evaluating data pipelines in order for users to more quickly and easily discover creative and valuable new uses of their data.

### SUMMARY

Disclosed are methods and systems for evaluating data pipelines. According to some embodiments, the method includes: receiving an input dataset, the input dataset including a data schema; generating a first prompt based on the input dataset and a first prompt structure having one or more text strings and one or more blanks; providing the first prompt to a language model; receiving a use case generated by the language model for the input dataset, the use case including a description of how to use the input dataset; generating a data pipeline based on the use case; and applying the data pipeline to the input dataset to generate an output dataset. The method is performed using one or more processors.

According to some embodiments, the system includes one or more memories having instructions stored therein and one or more processors configured to execute the instructions and perform operations. The operations include: receiving an input dataset, the input dataset including a data schema; generating a first prompt based on the input dataset and a first prompt structure having one or more text strings and one or more blanks; providing the first prompt to a language model; receiving a use case generated by the language model for the input dataset, the use case including a description of how to use the input dataset; generating a data pipeline based on the use case; and applying the data pipeline to the input dataset to generate an output dataset.

According to some embodiments, the method includes: receiving an input dataset, the input dataset including a data schema; generating a first prompt based on the input dataset and a first prompt structure having one or more text strings and one or more blanks; providing the first prompt to a language model; receiving a use case generated by the language model for the input dataset, the use case including a description of how to use the input dataset; generating a data pipeline based on the use case; applying the data pipeline to the input dataset to generate an output dataset; generating a second prompt based on a second prompt structure, the second prompt structure associated with the use case and the output dataset; providing the second prompt to the language model; receiving an evaluation function generated by the language model; and determining an evaluation metric using the evaluation function based on the use case and the output dataset. The generating a first prompt based on the input dataset and a first prompt structure comprises: determining text data based on the input dataset; and filling in the one or more blanks using the determined text data. The data schema includes one or more data field names and one or more data types; determining text data based on the input dataset comprises extracting at least one of the one or more data field names and a corresponding data type from the input dataset. The method is performed using one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

The accompanying drawings are incorporated in and constitute a part of this specification and, together with the description, explain the features and principles of the disclosed embodiments. In the drawings,
FIG. 1 is a simplified flowchart diagram showing a method for prototyping, generating, and/or evaluating a data pipeline according to certain embodiments of the present disclosure;
FIG. 2 is an illustrative example of a data pipeline prototyping, generation, and/or evaluation environment, according to certain embodiments of the present disclosure;
FIG. 3 is a simplified diagram showing a method for generating a data pipeline according to certain embodiments of the present disclosure; and
FIG. 4 is a simplified diagram showing a computing system for implementing a system for prototyping, generating, and/or evaluating a data pipeline according to some embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods often include manual design to identify applications (e.g., valuable applications, creative applications, etc.) of data. Such systems and methods are typically resource intensive and technically challenging. Conventional systems and methods also do not allow automated (or human-less) evaluation of LLM-generated ideas to assess their correctness or usefulness. A standard iterative large language model ("LLM") workflow typically includes the following steps: (1) a user provides a user input to prompt the LLM to solve a problem; (2) the user prototypes the idea that is generated by the LLM; (3) the user identifies a method to assess the idea for correctness or usefulness; and (4) the user evaluates the correctness or usefulness of the response and uses any insights generated to return to step (1) above as needed and re-prompts using the LLM with an added context. As such, there is extensive involvement of the user in order to assess the correctness or usefulness of the LLM-generated idea (solution) to the user-inputted problem.

Various embodiments of the present disclosure can achieve benefits and/or improvements by a computing system for generating and/or evaluating data pipelines, for example, using one or more language models and/or artificial intelligence models. Benefits can include significant improvements in creating data applications by, for example, generating use cases and generating evaluation functions using one or more language models and/or artificial intelligence models. Other benefits can include improving efficiencies for finding data applications including data pipelines using known input datasets. Benefits further include the capability of automatically designing and implementing a data pipeline associated with a goal (e.g., a use case). Systems and methods can be configured to use one or more language models and one or more prompt structures to generate prompts for use cases and/or to generate prompts for evaluation functions.

Problems may arise, especially for large problem spaces such as in big data problems, when the process of using an LLM to iterate on creative solutions can be resource-intensive, time-consuming, and technically challenging. Given an LLM-generated idea for how to use big data, it can be resource-intensive to prototype a solution (e.g., a data pipeline), assess the efficacy of the prototype, and use the efficacy of each solution as context for the next LLM generation to improve accuracy and usefulness.

According to aspects of the invention, systems and methods are configured to provide one or more prompts to one or more language models (e.g., large language models (LLMs), etc.) using artificial intelligence (AI) technologies to solve technical problems, for example, problems that are often technical, specific, and require creative specificity in answer. The conventional systems can receive prompts, also referred to as inquiry prompts, from users. Systems and methods are configured to provide prompts to the one or more language models in an iterative way; pointing out a mistake or missed context in a previous LLM response. The LLM, given its own previous response(s) and a new user prompt context, is able to re-generate an often more accurate or applicable response with the new context in mind. A prompt may refer to an input (e.g., a text input) instructing one or more generative AI models to generate a desired (e.g., requested) output.

The term "model," can include any computer-based models of any type and of any level of complexity, such as any type of sequential, functional, or concurrent model. Models can further include various types of computational models, such as, for example, artificial neural networks ("ANN"), language models (e.g., large language models), artificial intelligence ("AI") models, machine learning ("ML") models, generative AI models, and/or the like.

A language model ("LM") may include an algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. A language model can be an advanced artificial intelligence algorithm that has been trained to understand, generate, and manipulate natural language expressions (e.g., sentences, phases, essays, etc.). A language model can be useful for natural language processing, including receiving natural language prompts and providing natural language responses based on the text on which the model is trained. A language model may include an n-gram, exponential, positional, neural network, and/or other type of model.

According to some embodiments, a large language model ("LLM") includes any type of language model that has been trained on a larger data set and has a larger number of training parameters compared to a regular language model. An LLM can understand more intricate patterns and generate text that is more coherent and contextually relevant due to its extensive training. An LLM may perform well on a wide range of topics and tasks. An LLM may comprise an artificial neural network trained using self-supervised learning. An LLM may include a question-answer ("QA") LLM that may be optimized for generating answers from a context. A language model may include an autoregressive language model, such as a Generative Pre-trained Transformer 3 (GPT-3) model, a GPT 3.5-turbo model, a Claude model, a command-xlang model, a bidirectional encoder representations from transformers (BERT) model, a pathways language model (PaLM) 2, and/or the like.

According to certain embodiments, systems and methods include the process of using an LLM to iterate on creative solutions is resource intensive, time consuming, and/or technically challenging. Given an LLM generated use case (e.g., an idea) for how to use big data, systems and methods can prototype a solution (e.g., a data pipeline) for the use case, assess the efficacy of the prototype, and use the efficacy of each solution as context for the next LLM generation to improve accuracy and usefulness. At least some embodiments of the present disclosure are relevant to provide solutions to the technical problems of discovering creative and valuable new uses of data (e.g., one or more large datasets), for example, for data owners.

Systems and methods can use a prompt structure, also referred to as a "cookie cutter" prompt, which is a prewritten prompt format which has made up of pre-written text, and one or more blank spots that can be filled with text specific to a specific case. A prompt structure includes one or more text strings and one or more blank spots that can be filled with text. A prompt structure includes one or more text strings providing context of prompts and one or more blank spots that can be filled with text. Systems and methods can generate a prompt using the prompt structure and text data specific to a use case associated with the one or more blanks. Systems and methods can generate a prompt automatically and/or programmatically using the prompt structure and text data specific to a use case associated with the one or more blanks.

Systems and methods can use AI-assisted data pipeline builder. The AI-assisted data pipeline builder can include a technique given a natural language prompt of desired outcome and collection of one or more input datasets that is able to automatically construct a data pipeline of transforms to achieve the desired outcome. The pipeline builder can create a series of data transforms given some set of input datasets to create some set of output datasets. A data pipeline, also referred to as a pipeline, can include one or more data processing elements connected in series or in parallel. An output of one data processing element can be the input of the next data processing element. A plurality of data processing elements of a pipeline may be executed in parallel. At least a part or all of the one or more data processing elements may use a platform-specific language (e.g., a language or script language for a customized platform, platform-specific expressions). In some examples, the one or more data processing elements include, for example, selecting (e.g., filtering) a dataset, joining (e.g., aggregating) two or more datasets, selecting a set of data types (e.g., data columns), transforming data, selecting data records, removing data records (e.g., data rows), and/or the like.

A dataset may include one or more data field names, one or more data types and/or one or more data records. A data record may include data of the one or more data types. A data pipeline may include one or more data pipeline elements. The one or more data pipeline elements may include one or more datasets, transforms, one or more data filters, one or more data operations (e.g., joins, aggregations, etc.), and/or one or more function-based modifications of data. The data pipeline elements may include one or more data processing elements. The data pipeline elements include an output dataset.

Systems and methods of the present disclosure may include an iterative process of re-prompting a language model with additional context and/or clarification, for example, repeatedly to achieve a more accurate or useful result. Some systems may allow one or more users input to prompt the language model (e.g., the LLM) to solve a problem, one or more users prototype one or more ideas and assess ideas for correctness or usefulness, and/or evaluate the correctness or usefulness of the response. Systems and methods may use any insights generated by the above processes and re-prompt with LLM with added context (e.g., insights, correctness, usefulness, etc.).

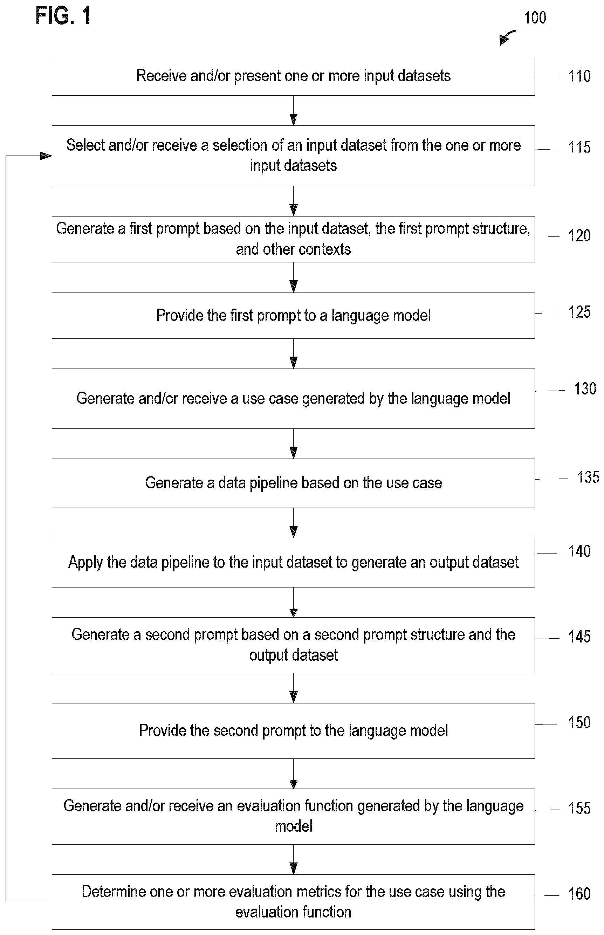

FIG. 1 is a simplified flowchart diagram showing a method 100 for prototyping, generating, and/or evaluating a data pipeline according to certain embodiments of the present disclosure. This diagram is merely an example. One of ordinary skill in the art would recognize many variations, alternatives, and modifications. The method 100 includes processes 110, 115, 120, 125, 130, 135, 140, 145, 150, 155 and 160 that can be performed using one or more processors. Although the above has been shown using a selected group of processes for the method, there can be many alternatives, modifications, and variations. For example, some of the processes may be expanded and/or combined. Other processes may be inserted to those noted above. Depending upon the embodiment, the sequence of processes may be interchanged with others replaced.

In some embodiments, some or all processes (e.g., steps) of the method 100 are performed by a system (e.g., the computing system 600). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to certain embodiments, at process 110, the system receives (e.g., retrieves) and/or presents one or more input datasets, for example, via a user interface. In some embodiments, an input dataset includes one or more tables and each table includes one or more rows of data. In certain embodiments, an input dataset includes a graph-based dataset. In some embodiments, a dataset has a corresponding data schema. In certain embodiments, the data schema includes one or more data field names (e.g., column names) and one or more data types (e.g., the data type for a column).

According to some embodiments, at process 115, the system selects and/or receives a selection of an input dataset from the one or more input datasets. In certain embodiments, at process 120, the system generates a first prompt (e.g., a first use case prompt) based on the input dataset and a first prompt structure and/or one or more contexts. In some embodiments, the system generates the first prompt using a natural language processing model based on the input dataset and a first prompt structure and/or one or more contexts. In some embodiments, the first prompt structure includes one or more text strings and one or more blanks. In some embodiments, the first prompt structure includes one or more predefined text strings. In certain embodiments, the first prompt structure includes one or more blanks to be filled in. In some embodiments, the one or more blanks are associated with the input dataset. In certain embodiments, the one or more blanks are associated with data schema corresponding to the input dataset. In some embodiments, the one or more blanks are associated with data field names (e.g., column names) and/or corresponding data types of the data schema corresponding to the input dataset. In certain embodiments, the system can determine text data from the input dataset and fill in the determined text data to the one or more blanks in the first prompt structure (e.g., a prompt structure for use cases). In some embodiments, the one or more blanks are associated with a use case (e.g., an idea), for example, blanks for one or more use case identifiers. In certain embodiments, the one or more blanks are associated with a use case (e.g., an idea) and a corresponding evaluation metric.

For example, a prompt structure, for generating a prompt for use case, is "Creative or useful use cases for data [blank 1] <insert each column name and type for each data set> given we have already tried [blank 2] <insert each past use case and its evaluation metric, if any>." As an example, a prompt structure is "Creative or useful use cases for data of shape [blank 1] <insert each column name and type for each data set> given we have already tried [blank 2] <insert each past use case and its evaluation metric, if any>." In some embodiments, the use cases may use a subset of the input dataset or the selected dataset. For example, the dataset includes four (4) tables and the use case may use three (3) of the four tables. As an example, the dataset includes one or more tables associated with flights, airports, pilots, planes, and/or the like.

In certain embodiments, an input dataset can include data associated with a data ontology. In some embodiments, an ontology refers to a structural framework (e.g., data model) containing information and data related to objects and relationships of objects (e.g., functions applicable to objects, links) within a specific domain (e.g., an organization, an industry). In certain embodiments, the system can use the information of an ontology including, for example, data schemas, to generate the first prompt.

According to certain embodiments, at process 125, the system provides the first prompt to a language model. In some embodiments, the language model runs on a same processor as the prompt generation processor. In certain embodiments, the language model runs on a different processor from the prompt generation processor. In some embodiments, at process 130, the system generates and/or receives a use case, where the use case is generated by the language model. In certain embodiments, the language model can generate two or more use cases associated with the first prompt. In some embodiments, a use case (e.g., an idea) refers to a description of how to use the data (e.g., the input dataset). For example, a use case is for managing plane switching. As an example, a use case is to maximize the number of passengers for a flight.

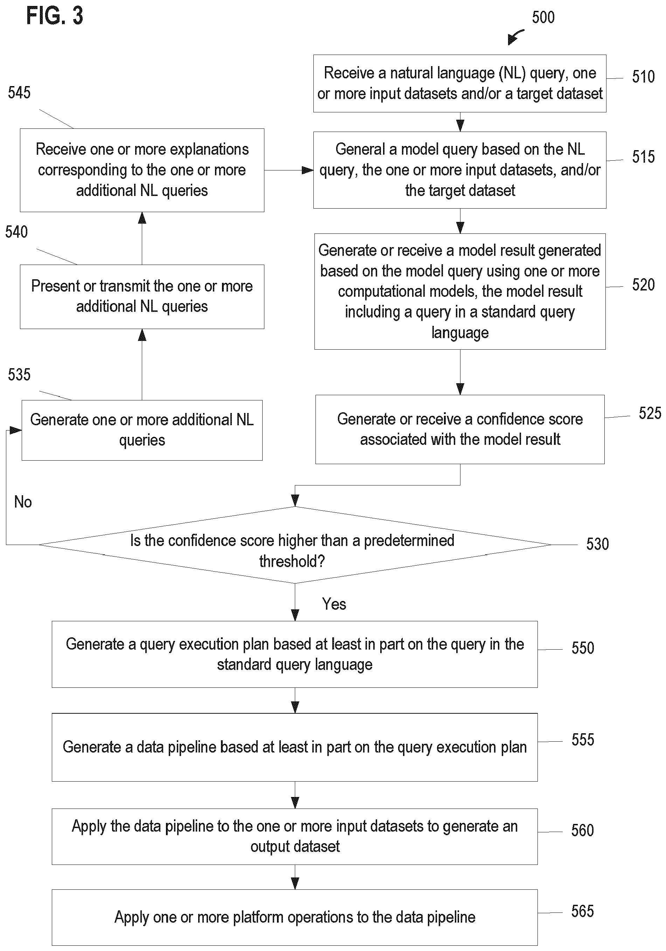

According to some embodiments, at process 135, the system generates a data pipeline based on the use case. In certain embodiments, the system uses a language model-assisted data transform builder to prototype and/or generate the data pipeline. One example of the data pipeline builder process is illustrated in FIG. 3. In certain embodiments, a language-model assisted data transform builder uses a language model to prototype and/or generate a data pipeline. In some embodiments, at process 140, the system applies the data pipeline to the input dataset to generate an output dataset. In certain embodiments, the output dataset has a data schema. In some embodiments, the output dataset is a table-based dataset including one or more tables and one or more columns and rows in each table. In certain embodiments, the output dataset is a graph-based dataset. In some embodiments, the output dataset includes a set of data in an ontology.

According to certain embodiments, at process 145, the system generates a second prompt (e.g., a first evaluation prompt, a first prompt for evaluation, a first prompt for data pipeline evaluation) based on a second prompt structure, the second prompt structure associated with the use case and the output dataset. In some embodiments, the system generates the second prompt using a natural language processing model based on a second prompt structure, the second prompt structure associated with the use case and the output dataset. In some embodiments, the one or more blanks in the prompt structure for evaluation are associated with the one or more output datasets. In certain embodiments, the one or more blanks in the prompt structure are associated with data schemas of the one or more output datasets. In some embodiments, the one or more blanks are associated with data field names (e.g., column names) and/or corresponding data types of the data schema corresponding to the one or more output datasets. In certain embodiments, the system can determine text data from the output dataset and fill in the determined text data to the one or more blanks in the prompt structure (e.g., a prompt structure for evaluation). In some embodiments, the one or more blanks are associated with a use case (e.g., an idea) describing how to use the dataset. In certain embodiments, the one or more blanks are associated with a goal (e.g., maximizing passengers) in the use case or associated with the use case. For example, a prompt structure (e.g., for a prompt for data pipeline evaluation) is "Given the goal of [blank 1] <insert use case> and the output schema of <insert each column name and type for each output data set in corresponding pipeline>, write a function that operates on the output data that quantifies how useful the data will be at achieving the goal, as a percent."

According to some embodiments, at process 150, the system provides the second prompt to the language model. In certain embodiments, at process 155, the system generates and/or receives an evaluation function generated by the language model, for example, to compute correctness or usefulness for a use case. In some embodiments, the evaluation function can determine an evaluation metric associated with the output dataset and the corresponding use case. In certain embodiments, the evaluation function and/or the evaluation metric are associated with a goal. In some embodiments, the evaluation metric is a standard metric (e.g., a percentage). In certain embodiments, at process 160, the system can determine one or more evaluation metrics, also referred to as insights, for example, the correctness or usefulness of the output dataset, using the evaluation function. In some embodiments, the system can use the evaluation metrics (e.g., insights) to go back to previous processes, for example, the process 115, for example, to re-prompt the language model with this added context.

According to some embodiments, the system can generate the prompt for use cases to include the input dataset schema, the previous use cases, corresponding evaluation metrics, and/or other contexts. In certain embodiments, the system can generate a plurality of data pipelines corresponding to the plurality of use cases and a plurality of evaluation metrics. In some embodiments, the system can rank the plurality of data pipelines based on the evaluation metrics and the system can include the ranking information in the prompt for use cases.

According to certain embodiments, the system can generate another use case prompt based on the input dataset, the first prompt structure, the use case, and the evaluation metric. In some embodiments, the system can provide the second use case prompt to the language model. In certain embodiments, the system can generate and/or receive a second use case generated by the language model for the input dataset. In some embodiments, the system can generate a second data pipeline based on the second use case. In certain embodiments, the system can apply the second data pipeline to the input dataset and generate a second output dataset.

According to some embodiments, the system can generate another evaluation prompt based on the second output dataset, the second prompt structure, and the second use case. In certain embodiments, the system can generate another evaluation prompt using a natural language processing model based on the second output dataset, the second prompt structure, and the second use case. In certain embodiments, the system can provide the second evaluation prompt to the language model. In some embodiments, the system can generate and/or receive a second evaluation function for the second use case. In certain embodiments, a plurality of generated evaluation functions associated with the same input dataset has a standardized metric. In some embodiments, at least two of a plurality of generated evaluation functions associated with the same input dataset include two different evaluation metrics.

According to certain embodiments, the system selects a use case from a plurality of use cases based on the corresponding evaluation metrics. In some embodiments, the system selects a use case having the highest evaluation metric. In certain embodiments, the system outputs and/or transmits the selected use case.

According to some embodiments, the language model for generating prompts is a first language model that is different from the language model used to generate data pipelines. In certain embodiments, the language model for generating prompts for use cases is different from the language model for generating prompts for data pipeline evaluations. In some embodiments, the language model for generating prompts for use cases is the same as the language model for generating prompts for data pipeline evaluations.

As an example, a prompt for use case is "A set of data contains one or more tables that each have a schema of column names. Table one has schema <column 1 name> with type <column 1 type> , column2 has schema <...> Table 2 has schema <column 1 name> with type <column 2 type>." In some embodiments, the system generates a plurality of use cases and a plurality of evaluation metrics, which can be incorporated into the prompt for use case. In certain embodiments, if an evaluation metric for a previous use case has a high evaluation score, more similar use cases may be generated and considered. In some embodiments, if an evaluation metric for a previous use case has a low evaluation score, more different use cases should be generated and considered.

According to certain embodiments, the first step of data analysis, for example, called "data characterizing", includes identifying the topic each table represents and what category that topic is. In certain embodiments, categories for the topic of a table are resources, containers of resources, processes, or issues, and every table fits best into one of these categories. People in this context are considered a resource. In some embodiments, the second step, for example, called "finding relationships", includes, for every pair of tables and their topics and categories, if there is a connection between them, categorizes the connection as containment, is required for, or prevents; and if there is no obvious connection between a pair of tables, no actions are to be taken.

In certain embodiments, the third step of data analysis, called "generating value", the system considers all relationships from the previous step and generates use cases if there is any way the system can use the data in the tables and the relationships to generate business value, especially for decision making (e.g., real-time decision making). Some examples of use cases (e.g., use cases of the system might generate value) include, for example, to optimize containment by bin packing, a reallocation if a resource depends on another, a reallocation would result in a better outcome, and/or stopping or modifying a process when an error arises with preference toward modifying to reduce error impact if possible. In some embodiments, the fourth step of data analysis, called "summarizing", the system summarizes into a list of the use cases.

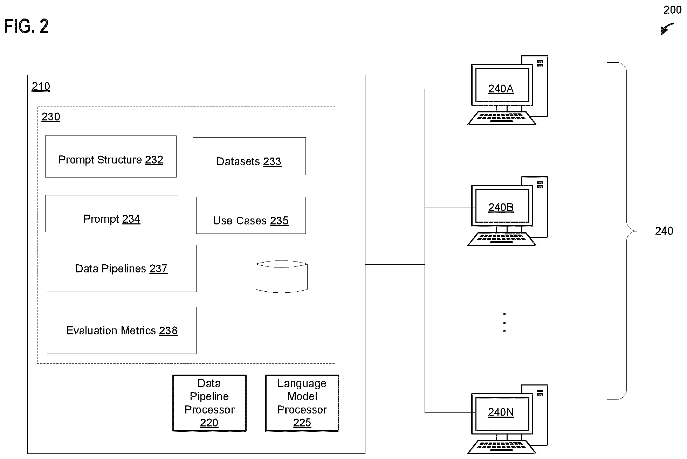

FIG. 2 is an illustrative example of a data pipeline prototyping, generation, and/or evaluation environment 200, according to certain embodiments of the present disclosure. FIG. 2 is merely an example. One of the ordinary skilled in the art would recognize many variations, alternatives, and modifications. According to certain embodiments, the data pipeline prototyping, generation, and evaluation environment 200 includes a data pipeline system 210 and one or more user devices or third-party devices 240 (e.g., a user/third-party device 240A, a user/third-party device 240B, ... a user/third-party device 240N). In some embodiments, the data pipeline system 210 includes one or more data pipeline processors 220, one or more language model processors 225, and one or more storage repositories 230.

In certain embodiments, one or more components of the pipeline management system 210 are incorporated into the one or more user/third-party devices 240 and/or other devices. In some embodiments, the one or more language model processors 225 can be hosted in a system different from the data pipeline system 210. Although the above has been shown using a selected group of components in the data pipeline prototyping, generation, and/or evaluation environment 200, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to some embodiments, the repository 230 includes one or more data repository storing one or more prompt structures 232, one or more datasets 233, one or more prompts 234, one or more use cases 235 (e.g., ideas of using data), one or more data pipelines 237 (e.g., configurations of data pipelines), one or more evaluation metrics 238. In certain embodiments, the data pipeline system 210 can use the prompt structure 232, information (e.g., a data schema, data field names, data types, column names, etc.) of one or more datasets 233 (e.g., an input dataset, a selected dataset), the evaluation metrics 238, and one or more contexts to generate a prompt 234 (e.g., an inquiry prompt).

In some embodiments, the system 210 may provide the prompt 234 to a language model run on a language model processor 225 to generate one or more use cases 235 for the dataset. In certain embodiments, datasets 233 are presented via a user interface (e.g., via a user device 240) to allow a selection. In some embodiments, the data pipeline system 210 can receive an input dataset via a user interface or a software interface. In certain embodiments, the data pipeline system 210 can receive an input dataset by retrieving the dataset from the repository 230.

According to certain embodiments, the prompt structure 232 includes one or more text strings. In some embodiments, the prompt structure 232 includes one or more predefined text strings. In certain embodiments, the prompt structure 232 includes one or more blanks to be filled in. In some embodiments, the one or more blanks are associated with the input dataset. In certain embodiments, the one or more blanks are associated with data schema corresponding to the input dataset. In some embodiments, the one or more blanks are associated with data field names (e.g., column names) and/or corresponding data types of the data schema corresponding to the input dataset. In certain embodiments, the data pipeline system 210 and/or the data pipeline processor 220 can determine text data from the input dataset and fill in the determined text data to the one or more blanks in the prompt structure 232 (e.g., a prompt structure for use cases). In some embodiments, the one or more blanks are associated with a use case (e.g., an idea), for example, blanks for one or more use case identifiers. In certain embodiments, the one or more blanks are associated with a use case (e.g., an idea) and a corresponding evaluation metric.

For example, a prompt structure, for generating a prompt for use case, is "Creative or useful use cases for data [blank 1] <insert each column name and type for each data set> given we have already tried [blank 2] <insert each past use case and its evaluation metric, if any>." As an example, a prompt structure is "Creative or useful use cases for data of shape [blank 1] <insert each column name and type for each data set> given we have already tried [blank 2] <insert each past use case and its evaluation metric, if any>." In some embodiments, the use cases may use a subset of the input dataset or the selected dataset. For example, the dataset includes four (4) tables and the use case may use three (3) of the four tables. As an example, the dataset includes one or more tables associated with flights, airports, pilots, planes, and/or the like.

In certain embodiments, an input dataset can include data associated with a data ontology. In some embodiments, an ontology refers to a structural framework (e.g., data model) containing information and data related to objects and relationships of objects (e.g., functions applicable to objects, links) within a specific domain (e.g., an organization, an industry). In certain embodiments, the data pipeline system 210 and/or the data pipeline processor 220 can use the information of an ontology including, for example, data schemas, to generate a prompt 232.

According to some embodiments, the data pipeline system 210 and/or the data pipeline processor 220 can use the generated use cases 235 and a language-model assisted data transform builder, also referred to as a language-model powered data transform builder, to prototype and/or generate a data pipeline, also referred to as a data transform pipeline, for a use case. In certain embodiments, a language-model assisted data transform builder uses a language model to generate a data pipeline. In some embodiments, the data pipeline system 210 and/or the data pipeline processor 220 can generate one or more output datasets using the generated data pipeline. In certain embodiments, the data pipeline system 210 and/or the data pipeline processor 220 can generate a second prompt 234 (e.g., a prompt for data pipeline evaluation) using a prompt structure 232 and the output dataset(s).

In some embodiments, the one or more blanks in the prompt structure 232 are associated with the one or more output datasets. In certain embodiments, the one or more blanks in the prompt structure 232 are associated with data schemas of the one or more output datasets. In some embodiments, the one or more blanks are associated with data field names (e.g., column names) and/or corresponding data types of the data schema corresponding to the one or more output datasets. In certain embodiments, the data pipeline system 210 and/or the data pipeline processor 220 can determine text data from the output dataset and fill in the determined text data to the one or more blanks in the prompt structure 232 (e.g., a prompt structure for evaluation. In some embodiments, the one or more blanks are associated with a use case (e.g., an idea) describing how to use the dataset. In certain embodiments, the one or more blanks are associated with a goal (e.g., maximizing passengers) in the use case or associated with the use case. For example, a prompt structure (e.g., for a prompt for data pipeline evaluation) is "Given the goal of [blank 1] <insert use case> and the output schema of <insert each column name and type for each output data set in corresponding pipeline>, write a function that operates on the output data that quantifies how useful the data will be at achieving the goal, as a percent."

According to certain embodiments, the data pipeline system 210 and/or the data pipeline processor 220 can provide the second prompt 234 to a language model run on the language model processor 225 to generate an evaluation function, for example, to compute correctness or usefulness for a use case. In some embodiments, the evaluation function can determine an evaluation metric associated with the output dataset and the corresponding use case. In certain embodiments, the evaluation function and/or the evaluation metric is associated with a goal. In some embodiments, the evaluation metric is a standard metric (e.g., a percentage). In certain embodiments, the data pipeline system 210 and/or the data pipeline processor 220 can determine the one or more evaluation metrics, also referred to as insights, for example, the correctness or usefulness of the output dataset (e.g., the prototype output dataset), using the evaluation function. In some embodiments, the data pipeline system 210 and/or the data pipeline processor 220 can use the evaluation metrics (e.g., insights) to back to previous steps to re-prompt the language model with this added context. In certain embodiments, the data pipeline system 210 can generate a plurality of data pipelines corresponding to the plurality of use cases and a plurality of evaluation metrics. In some embodiments, the data pipeline system 210 can rank the plurality of data pipelines based on the evaluation metrics.

According to some embodiments, from a user's perspective, the user needs only supply the data pipeline system 210 with sufficient information (e.g., datasets with schema) to fill in the blanks of a prompt structure (e.g., a cookie cutter prompt), select how many times the user would like to iterate, and then the highest ranked data pipeline discovered, as measured by the generated evaluation metrics. In certain embodiments, for the same dataset, different candidate use cases can have evaluation metrics (e.g., usefulness in vastly different ways). For instance, two use cases for the same dataset may be airplane switching or including as many customers per plane. In certain embodiments, the data pipeline system 210 and/or the data pipeline processor 220 is configured to generate a standardized metric of evaluation (e.g., a standard metric of success) that can be compared across different use cases, using a computing model, a machine learning model, a language model, and/or the like.

As an example, a prompt for use case is "A set of data contains one or more tables that each have a schema of column names. Table one has schema <column 1 name> with type <column 1 type> , column2 has schema <...> Table 2 has schema <column 1 name> with type <column 2 type>." In some embodiments, the data pipeline system 210 and/or the data pipeline processor 220 have a plurality of use cases and a plurality of evaluation metrics, which can be incorporated into the prompt for use case. In certain embodiments, if an evaluation metric for a previous use case has a high evaluation score, more similar use cases may be generated and considered. In some embodiments, if an evaluation metric for a previous use case has a low evaluation score, more different use cases should be generated and considered.

According to certain embodiments, the first step of data analysis, for example, called "data characterizing", includes identifying the topic each table represents and what category that topic is. In certain embodiments, categories for the topic of a table are resources, containers of resources, processes, or issues, and every table fits best into one of these categories. People in this context are considered a resource. In some embodiments, the second step, for example, called "finding relationships", includes, for every pair of tables and their topics and categories, if there is a connection between them, categorizes the connection as containment, is required for, or prevents; and if there is no obvious connection between a pair of tables, no actions are to be taken.

In certain embodiments, the third step of data analysis, called "generating value", the data pipeline system 210 and/or the data pipeline processor 220 consider all relationships from the previous step and generate use cases if there is any way the system can use the data in the tables and the relationships to generate business value, especially for decision making (e.g., real-time decision making). Some examples of use cases (e.g., use cases of the system might generate value) include, for example, to optimize containment by bin packing, a reallocation if a resource depends on another, a reallocation would result in a better outcome, and/or stopping or modifying a process when an error arises with preference toward modifying to reduce error impact if possible. In some embodiments, the fourth step of data analysis, called "summarizing", the data pipeline system 210 and/or the data pipeline processor 220 summarizes into a list of the use cases.

According to some embodiments, the data pipeline system 210 and/or the data pipeline processor 220, for example, using a pipeline builder (e.g., a language-model powered pipeline builder), is configured to receive an NL query (e.g., free-text query, a pipeline description), one or more input datasets, and/or a target dataset (e.g., one or more target datasets) from a user input or an input via a software interface. In some examples, the query or description may be included in one or more input datasets. In certain examples, the user input is from a user device 240 of a user. In some examples, the input is from a computing solution running on one or more user/third-party devices 240. In certain embodiments, the data pipeline system 210 and/or the data pipeline processor 220 can generate a model query by combining the NL query with the one or more input datasets and/or the one or more datasets. As an example, an NL query is a free-text query that the user enters via a user interface, such as, "Provide a count of people who have earned less than the US minimum wage in 2020." In some embodiments, each of the one or more input datasets include a data schema (e.g., an employee table, a department table, a payment table) and data. In certain embodiments, a user can select input datasets via a user interface. For example, a user can select the datasets (e.g., highlighted datasets) on a user interface.

In some embodiments, one or more target datasets can be defined based on a user input or an input via a software interface. In some embodiments, a target dataset can include one or more target data types (e.g., data columns, data fields). In certain embodiments, a user can define the one or more target datasets via a user interface.

According to certain embodiments, the data pipeline system 210 and/or the data pipeline processor 220 can generate a model query based on the NL query, the one or more input datasets, and/or the target dataset. In some embodiments, the model query includes the NL query and the one or more input datasets. In certain embodiments, the model query includes the NL query and the target dataset. In some embodiments, the model query includes the NL query. In certain embodiments, the model query includes the target dataset. In some embodiments, the model query includes the one or more input datasets and the target dataset. In certain embodiments, the data pipeline system 210 and/or the data pipeline processor 220 can use the target dataset to define the query. In some embodiments, the data pipeline system 210 and/or the data pipeline processor 220 can incorporate one or more parameters and parameter values and/or parameter ranges to the model query. In certain embodiments, the data pipeline system 210 and/or the data pipeline processor 220 can incorporate one or more parameters and parameter values and/or parameter ranges to the model query to ensure the query generated in the following step is valid. For example, the data pipeline system 210 and/or the data pipeline processor 220 can incorporate a temperature parameter, and can set the temperature to be greater than zero.

According to some embodiments, the data pipeline system 210 and/or the language model processor 225 generates or receives a model result generated based on the model query using one or more computing models. In certain embodiments, the data pipeline system 210 and/or the language model processor 225 processes the model query using one or more computing models (e.g., a natural language processing model, a model solution) to generate a query (e.g., a model result) in a standard query language (e.g., SQL). In certain embodiments, the data pipeline system 210 and/or the language model processor 225 transmits, via a software interface, the model query to a model solution (e.g., OpenAI) including one or more computing models for processing, and receives the model result (e.g., the query in the standard query language). In some embodiments, the one or more computing models include a natural language processing model. In certain embodiments, the model may include a machine-learning NL processing model. For example, the model may include an autoregressive language model, such as a Generative Pre-trained Transformer 3 (GPT-3) model. As an example, the model may include a natural language understanding model.

In some embodiments, the one or more computing models are selected based on a user input or an input via a software interface. In certain embodiments, the model solution can be a part of the data pipeline system 210 and/or the language model processor 225. In some embodiments, the model solution can run externally from the data pipeline system 210 and/or the data pipeline processor 220. In certain embodiments, the model solution selects the one or more computing models based on the model query.

In certain embodiments, the data pipeline system 210 and/or the data pipeline processor 220 is configured to make sure data pipelines are accurate. In some embodiments, the data pipeline system 210 and/or the data pipeline processor 220 interacts with the model solution to figure out if, given the NL query, the model solution has the right level of understanding of the concepts in the NL query. If not, the model solution, via the data pipeline system 210 and/or the data pipeline processor 220, prompt the user for an explanation, and the data pipeline system 210 and/or the data pipeline processor 220 can feed the explanation back to the model to ensure the most accurate pipeline is generated. In certain embodiments, the data pipeline system 210 and/or the data pipeline processor 220 can tie the explanation back to the datasets (e.g., the input datasets, the target dataset), to make sure that that the explanation (e.g., context) is stored for the pipelining attempts.

According to certain embodiments, the data pipeline system 210 and/or the data pipeline processor 220, via the model solution can generate or receive a confidence score associated with the model result (e.g., the query in the standard query language). In some embodiments, the confidence score indicates whether information (e.g., concept explanation) is missing. In certain embodiments, the confidence score is one of one or more metrics being used. In some embodiments, the confidence score can be replaced by one or more other metrics. In certain embodiments, the data pipeline system 210 and/or the data pipeline processor 220 and/or the model solution determines the confidence score based on one or more concepts extracted from the model query. In some embodiments, the data pipeline system 210 and/or the language model processor 225 determines the confidence score based on one or more concepts extracted from the model query and the one or more input datasets. In certain embodiments, the data pipeline system 210 and/or the language model processor 225 is set to a low value (e.g., a low level) if a concept extracted from the model query does not correspond to the one or more input datasets.

According to some embodiments, the data pipeline system 210 and/or the data pipeline processor 220 can determine whether the confidence score associated with the model result and/or the query in the standard language is higher than a predetermined threshold. In certain embodiments, if the confidence score is lower than a predetermined threshold, the data pipeline system 210 and/or the language model processor 225 can generate one or more additional NL queries.

According to certain embodiments, the data pipeline system 210 and/or the data pipeline processor 220 presents (e.g., on a user device 240) or transmits (e.g., to one or more user/third-party devices 240) the one or more additional NL queries. In some embodiments, the data pipeline system 210 and/or the data pipeline processor 220 receives one or more explanations correspond to the one or more additional NL queries. In certain embodiments, the data pipeline system 210 and/or the data pipeline processor 220 can incorporate the one or more explanations into the model query. In some embodiments, the data pipeline system 210 and/or the data pipeline processor 220 can incorporate the one or more explanations into the one or more input datasets and/or the target dataset.

According to some embodiments, the data pipeline system 210 and/or the data pipeline processor 220 can receive an NL query (e.g., a question) that is underspecified. For example, the question includes concepts (e.g., concepts used by users) that does not match to data schemas (e.g., the data model). For example, some of the data types (e.g., data columns) don't reflect the same language that a user is using. In certain embodiments, instead of trying to take a guess, the data pipeline system 210 and/or the data pipeline processor 220 and/or the model solution can set low confidence, or another metric, on the NL query. In some embodiments, the data pipeline system 210 and/or the data pipeline processor 220 and/or the model solution can compile clarification questions, for example, "what do you mean by certain term" where the certain term corresponds to a missing concept (e.g., an unmatched column). In certain embodiments, this approach allows filling in the gap of the information that the model is missing. In some embodiments, the data pipeline system 210 and/or the data pipeline processor 220 can take all the information (e.g., NL query, one or more explanations), and re-run the one or more computing models (e.g., via the model solution), such that the generated model result has high confidence. In certain examples, the NL query includes a term that is mentioned in any column (e.g., data types).

According to certain embodiments, the data pipeline system 210 and/or the data pipeline processor 220 can generate a query execution plan based at least in part on the query in the standard query language. In some embodiments, the query execution plan includes an order (e.g., a sequence, a tree structure) for a plurality of query operations to be applied to data (e.g., data repository). In certain embodiments, the query execution plan includes a logical plan and/or a physical plan. In some embodiments, a logical plan includes a plurality of logical operators applying to data and an order of the logical operators being applied. In certain embodiments, a physical plan includes physical implementation information of a query plan. In certain embodiments, the data pipeline system 210 and/or the data pipeline processor 220 can use a query manager (e.g., a SQL manager) to generate the query execution plan. In some embodiments, the query manager includes a query validator to validate the generated query in the standard query language. In some embodiments, the query manager can use a software package (e.g., APACHE CALCITE).

According to some embodiments, the data pipeline system 210 and/or the data pipeline processor 220 can generate a data pipeline based at least in part on the query execution plan. In certain embodiments, the data pipeline includes one or more data pipeline elements. In some embodiments, the one or more data pipeline elements include one or more datasets, filters, joins, aggregations, and/or function-based modifications of data. In certain embodiments, the one or more data pipeline elements include one or more datasets and one or more data processing elements. In some embodiments, the one or more datasets include one or more input datasets and/or one or more output datasets. In some embodiments, the one or more data processing elements include filters, joins, aggregations, and/or function-based modifications of data.

According to certain embodiments, the data pipeline system 210 and/or the data pipeline processor 220 can map one or more query components of the query in the standard query language to one or more pipeline elements. In some embodiments, the data pipeline system 210 and/or the data pipeline processor 220 can map, using the query execution plan, one or more query components of the query in the standard query language to one or more pipeline elements. In certain embodiments, the one or more query components include one or more data queries (e.g., select statements, etc.), data manipulations (e.g., inserts, updates, deletes, etc.), data definitions (e.g., schema creations, schema modifications, etc.), data access controls, and/or the like.

In certain embodiments, the data pipeline is in one or more platform-specific expressions of a first platform (e.g., a domain). In certain embodiments, the computing system can convert the query execution plan (e.g., a logical plan, a physical plan) into platform-specific expressions to generate the data pipeline. In some embodiments, the platform-specific expressions can include scripts. In certain embodiments, the platform-specific expressions are associated with a proprietary platform (e.g., a customized platform). In certain embodiments, the query execution plan includes a plurality of query steps, and the data pipeline includes a plurality of data pipeline elements (e.g., pipeline steps) corresponding to the plurality of query steps. In some embodiments, a plurality of pipeline steps are corresponding to the plurality of query steps in one-to-one relationship. In certain embodiments, the target dataset can be converted into a target object, and the generated data pipeline is associated with the target object, for example, in a semantic layer, which can be reused. In some embodiments, the generated data pipeline is captured in an object.

According to certain embodiments, the data pipeline system 210 and/or the data pipeline processor 220 can apply the data pipeline to the one or more input datasets to generate an output dataset. In some embodiments, if a target dataset is provided, the output dataset has a same data schema as the target dataset. In some embodiments, the data pipeline system 210 and/or the data pipeline processor 220 can apply one or more platform operations of a proprietary platform to the data pipeline. For example, the one or more platform operations include one or more of search, security, branching, data health check, data health contract, visualizations, and/or the like. In certain embodiments, the data pipeline object and/or the target object can be used in actions and decisions. In some embodiments, an action refers to one or more processing logics applied to one or more objects including, for example, creating objects, changing objects, combining objects, linking objects, deleting objects, and/or the like.

In some embodiments, the data repository 230 can include prompt structures, prompts, datasets, use cases, evaluation metrics, NL queries, queries in a standard query language, data pipelines, query execution plans, data pipeline descriptions, and/or the like. The repository 230 may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the data pipeline prototyping, generation and/or evaluation environment 200 can execute software or firmware stored in non-transitory computer-readable medium to implement various processing steps. Various components and processors of the data pipeline prototyping, generation and/or evaluation environment 200 can be implemented by one or more computing devices including, but not limited to, circuits, a computer, a cloud-based processing unit, a processor, a processing unit, a microprocessor, a mobile computing device, and/or a tablet computer. In some cases, various components of the data pipeline prototyping, generation and/or evaluation environment 200 (e.g., the data pipeline system 210, the data pipeline processor 220, the language model processor 225, the user/third-party device 240) can be implemented on a shared computing device. Alternatively, a component of the data pipeline prototyping, generation and/or evaluation environment 200 can be implemented on multiple computing devices. In some implementations, various modules and components of the data pipeline prototyping, generation and/or evaluation environment 200 can be implemented as software, hardware, firmware, or a combination thereof. In some cases, various components of the data pipeline prototyping, generation and/or evaluation environment 200 can be implemented in software or firmware executed by a computing device.

Various components of the data pipeline prototyping, generation and/or evaluation environment 200 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

FIG. 3 is a simplified diagram showing a method 500 for generating a data pipeline according to certain embodiments of the present disclosure. This diagram is merely an example. One of ordinary skill in the art would recognize many variations, alternatives, and modifications. The method 500 for generating a data pipeline includes processes 510, 515, 520, 525, 530, 535, 540, 545, 550, 555, 560, and 565. Although the above has been shown using a selected group of processes for the method 500 for generating a data pipeline, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 500 are performed by a system (e.g., the computing system 600). In certain examples, some or all processes (e.g., steps) of the method 500 are performed by a computer and/or a processor directed by a code. For example, a computer includes a server computer and/or a client computer (e.g., a personal computer). In some examples, some or all processes (e.g., steps) of the method 500 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 510, the computing system (e.g., a pipeline management system, components of a pipeline management system) is configured to receive an NL query (e.g., free-text query, a pipeline description), one or more input datasets, and/or a target dataset (e.g., one or more target datasets) from a user input or an input via a software interface. In certain embodiments, the query or description may be included in one or more input datasets. In some embodiments, a software interface includes an application programming interface (API), a web service interface, retrieving information from a file, retrieving information from a data repository, and/or the like. In certain embodiments, the computing system can generate a model query by combining the NL query with the one or more input datasets and/or the one or more datasets. As an example, an NL query is a free-text query that the user enters via a user interface, such as, "Provide a count of people who have earned less than the US minimum wage in 2020." In some embodiments, each of the one or more input datasets include a data schema (e.g., an employee table, a department table, a payment table) and data. In certain embodiments, a user can select input datasets via a user interface. For example, a user can select the datasets (e.g., highlighted datasets) on a user interface.

In some embodiments, one or more target datasets can be defined based a user input or an input via a software interface. In some embodiments, a target dataset can include one or more target data types (e.g., data columns, data fields). In certain embodiments, a user can define the one or more target datasets via a user interface.

According to certain embodiments, at process 515, the computing system can generate a model query based on the NL query, the one or more input datasets, and/or the target dataset. In some embodiments, the model query includes the NL query and the one or more input datasets. In certain embodiments, the model query includes the NL query and the target dataset. In some embodiments, the model query includes the NL query. In certain embodiments, the model query includes the target dataset. In some embodiments, the model query includes the one or more input datasets and the target dataset. In certain embodiments, the computing system can use the target dataset to define the query. In some embodiments, the computing system can incorporate one or more parameters and parameter values and/or parameter ranges to the model query. In certain embodiments, the computing system can incorporate one or more parameters and parameter values and/or parameter ranges to the model query to ensure the query generated in the following step is valid. For example, the computing system can incorporate a temperature parameter, and can set the temperature to be greater than zero.

According to some embodiments, at process 520, the computing system generates or receives a model result generated based on the model query using one or more computing models. In certain embodiments, the computing system processes the model query using one or more computing models (e.g., a natural language processing model, a model solution) to generate a query (e.g., a model result) in a standard query language (e.g., SQL). In certain embodiments, the computing system transmits, via a software interface, the model query to a model solution (e.g., OpenAI) including one or more computing models for processing, and receives the model result (e.g., the query in the standard query language). In some embodiments, a model, also referred to as a computing model, includes a model to process data. In certain embodiments, a model includes, for example, an artificial intelligence (AI) model, a machine learning (ML) model, a deep learning (DL) model, an image processing model, an algorithm, a rule, other computing models, and/or a combination thereof. In some embodiments, the one or more computing models include a natural language processing model. In certain embodiments, the model may include a machine-learning NL processing model. For example, the model may include an autoregressive language model, such as a Generative Pre-trained Transformer 3 (GPT-3) model. As an example, the model may include a natural language understanding model.

In some embodiments, the one or more computing models are selected based on a user input or an input via a software interface. In certain embodiments, the model solution can be a part of the computing system. In some embodiments, the model solution can run externally from the computing system. In certain embodiments, the model solution selects the one or more computing models based on the model query.

In certain embodiments, the computing system is configured to make sure data pipelines are accurate. In some embodiments, the computing system interacts with the model solution to figure out if, given the NL query, the model solution has the right level of understanding of the concepts in the NL query. If not, the model solution, via the computing system, prompt the user for an explanation, and the computing system can feed the explanation back to the model to ensure the most accurate pipeline is generated. In certain embodiments, the computing system can tie the explanation back to the datasets (e.g., the input datasets, the target dataset), to make sure that that the explanation (e.g., context) is stored for the pipelining attempts.

According to certain embodiments, at process 525, the computing system, via the model solution can generate or receive a confidence score associated with the model result (e.g., the query in the standard query language). In some embodiments, the confidence score indicates whether information (e.g., concept explanation) is missing. In certain embodiments, the confidence score is one of one or more metrics being used. In some embodiments, the confidence score can be replaced by one or more other metrics. In certain embodiments, the computing system and/or the model solution determines the confidence score based on one or more concepts extracted from the model query. In some embodiments, the computing system and/or the model solution determines the confidence score based on one or more concepts extracted from the model query and the one or more input datasets. In certain embodiments, the computing system and/or the model solution is set to a low value (e.g., a low level) if a concept extracted from the model query does not correspond to the one or more input datasets. For example, the NL query is "Provide a count of employees who made more money than the CTO in 2020", the model solution determines that CTO is unknown, and the confidence score is set to a low value (e.g., a low level).

According to some embodiments, at process 530, the computing system can determine whether the confidence score associated with the model result and/or the query in the standard language is higher than a predetermined threshold. In certain embodiments, if the confidence score is lower than a predetermined threshold, at process 535, the computing system and/or the model solution can generate one or more additional NL queries. In the previous example, the additional NL query of "Who is the CTO?" can be generated.

According to certain embodiments, at process 540, the computing system presents or transmits (e.g., to another computing device) the one or more additional NL queries. In some embodiments, at process 545, the computing system receives one or more explanations corresponding to the one or more additional NL queries. In certain embodiments, at process 515, the computing system can incorporate the one or more explanations to the model query. In some embodiments, the computing system can incorporate the one or more explanations into the one or more input datasets and/or the target dataset. In the previous example, the computing system may receive an explanation of "CTO is Joe Doe" and incorporate it to the model query.

According to some embodiments, the computing system may receive or generate the model result including an SQL query, and optionally a confidence score. In the previous example, the generated SQL query can be:

```
SELECT first_name, last_name, salary_payment_in_us_dollars
     FROM Employees
     JOIN Payments ON Employees.employee_id = Payments.employee_id
     WHERE salary_payment _in_us_dollars > (SELECT salary_payment _in_us_dollars
             FROM Employees
             JOIN Payments ON Employees.employee_id = Payments.employee id
             WHERE first_name = 'John' AND last_name = 'Doe' AND payment_year =
             2020)
```

As an example, a user (e.g., a domain expert) may ask "What is the rate of upload for agents?" In some embodiments, the model solution can identify there is a missing concept, for example, the concept of "rate of upload," in the data schema (e.g., data schema of the input datasets, data schema of the output datasets). In certain examples, the computing system can generate clarification questions corresponding to the missing concept (e.g., underspecified fragments given schemas), for example, "What do you mean by rate of upload?" In some examples, the clarification questions can be posted to the user, and in response to the clarification questions, the computing system may receive one or more explanations corresponding to the clarification questions. In certain examples, the computing system can incorporate the explanations to the model query for generating the model result, for example, to get an accurate pipeline for the original NL query.

According to some embodiments, the computing system can receive an NL query (e.g., a question) that is under specified. For example, the question includes concepts (e.g., concepts used by users) that does not match to data schemas (e.g., the data model). For example, some of the data types (e.g., data columns) don't reflect the same language that a user is using. In certain embodiments, instead of trying to take a guess, the computing system and/or the model solution can set low confidence, or other metric, on the NL query. In some embodiments, the computing system and/or the model solution can compile clarification questions, for example, "what do you mean by certain term" where the certain term corresponds to a missing concept (e.g., an unmatched column). In certain embodiments, this approach allows filling in the gap of the information that the model is missing. In some embodiments, the computing system can take all the information (e.g., NL query, one or more explanations), and re-run the one or more computing models (e.g., via the model solution), such that the generated model result has high confidence. In certain examples, the NL query includes a term that is mentioned in any column (e.g., data types).

According to certain embodiments, at process 550, the computing system can generate a query execution plan based at least in part on the query in the standard query language. In some embodiments, the query execution plan includes an order (e.g., a sequence, a tree structure) for a plurality of query operations to be applied to data (e.g., data repository). In certain embodiments, the query execution plan includes a logical plan and/or a physical plan. In some embodiments, a logical plan includes a plurality of logical operators applying to data and an order of the logical operators being applied. In certain embodiments, a physical plan includes physical implementation information of a query plan. In certain embodiments, the computing system can use a query manager (e.g., a SQL manager) to generate the query execution plan. In some embodiments, the query manager includes a query validator to validate the generated query in the standard query language. In some embodiments, the query manager can use a software package (e.g., APACHE CALCITE).

According to some embodiments, at process 555, the computing system can generate a data pipeline based at least in part on the query execution plan and/or the model result. In certain embodiments, the data pipeline includes one or more data pipeline elements. In some embodiments, the one or more data pipeline elements include one or more datasets, filters, joins, aggregations, and/or function-based modifications of data. In certain embodiments, the one or more data pipeline elements include one or more datasets and one or more data processing elements. In some embodiments, the one or more datasets include one or more input datasets and/or one or more output datasets. In some embodiments, the one or more data processing elements include filters, joins, aggregations, and/or function-based modifications of data.

According to certain embodiments, the computing system can map one or more query components of the query in the standard query language to one or more pipeline elements. In some embodiments, the computing system can map one or more query components of the query in the standard query language, using the query execution plan to one or more pipeline elements. In certain embodiments, the one or more query components includes one or more data queries (e.g., select statements, etc.), data manipulations (e.g., inserts, updates, deletes, etc.), data definitions (e.g., schema creations, schema modifications, etc.), data access controls, and/or the like.

In certain embodiments, the data pipeline in one or more platform-specific expressions of a first platform (e.g., a domain). In certain embodiments, the computing system can convert the query execution plan (e.g., a logical plan, a physical plan) into platform-specific expressions to generate the data pipeline. In some embodiments, the platform-specific expressions can include scripts. In certain embodiments, the platform-specific expressions are associated with a proprietary platform (e.g., a customized platform). In certain embodiments, the query execution plan includes a plurality of query steps, and the data pipeline includes a plurality of data pipeline elements (e.g., pipeline steps) corresponding to the plurality of query steps. In some embodiments, a plurality of pipeline steps are corresponding to the plurality of query steps in one-to-one relationship. In certain embodiments, the target dataset can be converted into a target object, and the generated data pipeline is associated with the target object, for example, in a semantic layer, which can be reused. In some embodiments, the generated data pipeline is captured in an object.

According to certain embodiments, at process 560, the computing system can apply the data pipeline to the one or more input datasets to generate an output dataset. In some embodiments, if a target dataset is provided, the output dataset has the same data schema as the target dataset. In some embodiments, at process 565, the computing system can apply one or more platform operations of a platform (e.g., a proprietary platform) to the data pipeline. For example, the one or more platform operations include one or more of search, security, branching, data health check, data health contract, visualizations. In certain embodiments, the data pipeline object and/or the target object can be used in actions and decisions. In some embodiments, an action refers to one or more processing logics applied to one or more objects including, for example, creating objects, changing objects, combining objects, linking objects, deleting objects, and/or the like.

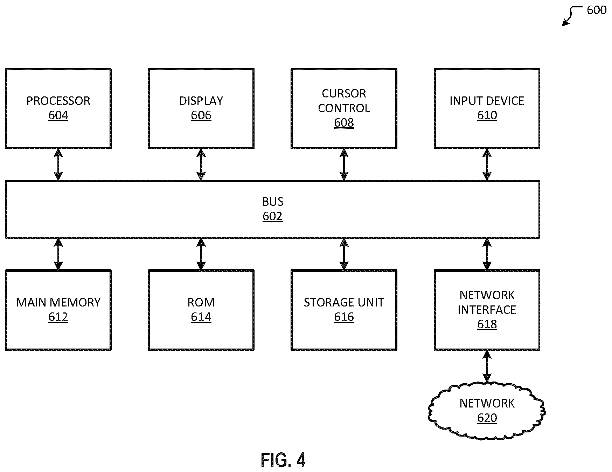

FIG. 4 is a simplified diagram showing a computing system for implementing a system for prototyping, generating, and/or evaluating a data pipeline according to some embodiments of the present disclosure. This diagram is merely an example. One of ordinary skill in the art would recognize many variations, alternatives, and modifications.

The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In certain embodiments, some or all processes (e.g., steps) of the methods 100 and/or 500 are performed by the computing system 600. In some examples, the bus 602 is coupled to the processor 604, the display 606, the cursor control component 608, the input device 610, the main memory 612, the read only memory (ROM) 614, the storage unit 616, and/or the network interface 618. In certain examples, the network interface is coupled to a network 620. For example, the processor 604 includes one or more general purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For examples, the instructions, when stored in the storage unit 616 accessible to processor 604, render the computing system 600 into a special-purpose machine that is customized to perform the operations specified in the instructions. In some examples, the ROM 614 is configured to store static information and instructions for the processor 604. In certain examples, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some examples, the input device 610 (e.g., alphanumeric and other keys) is configured to communicate information and commands to the processor 604. For example, the cursor control 608 (e.g., a mouse, a trackball, or cursor direction keys) is configured to communicate additional information and commands (e.g., to control cursor movements on the display 606) to the processor 604.

According to certain embodiments, a method for data pipeline evaluations comprises: receiving an input dataset, the input dataset including a data schema; generating a first prompt based on the input dataset and a first prompt structure having one or more text strings and one or more blanks; providing the first prompt to a language model; receiving a use case generated by the language model for the input dataset, the use case including a description of how to use the input dataset; generating a data pipeline based on the use case; and applying the data pipeline to the input dataset to generate an output dataset; wherein the method is performed using one or more processors. For example, the method is implemented according to at least FIG. 1, and/or FIG. 3.

In some embodiments, the method further comprises generating a second prompt based on a second prompt structure, the second prompt structure associated with the use case and the output dataset; providing the second prompt to the language model; receiving an evaluation function generated by the language model; and determining an evaluation metric using the evaluation function based on the use case and the output dataset. In certain embodiments, the second prompt structure includes one or more second text strings and one or more second blanks, wherein the generating a second prompt based on a second prompt structure comprises: determining second text data based on the use case; and filling in the one or more second blanks using the determined second text data. In some embodiments, the method further comprises generating a second prompt based on the input dataset, the first prompt structure, the use case, and the evaluation metric; providing the second prompt to the language model; receiving a second use case generated by the language model for the input dataset; and generating a second data pipeline based on the second use case.

In certain embodiments, the use case is a first use case, the output dataset is a first output dataset, and the data pipeline is a first data pipeline, wherein the method further comprises: receiving a second use case generated by the language model for the input dataset, the second use case including a second description of how to use the input dataset; generating a second data pipeline based on the second use case; and applying the second data pipeline to the input dataset to generate a second output dataset. In some embodiments, the evaluation function is a first evaluation function and the evaluation metric is a first evaluation metric, wherein the method further comprises: generating a third prompt based on the second prompt structure, the second use case, and the second output dataset; providing the second prompt to the language model; receiving a second evaluation function generated by the language model; and determining a second evaluation metric using the second evaluation function based on the second use case and the second output dataset. In certain embodiments, the method further comprises: selecting a use case from the first use case and the second use case based on the first evaluation metric and the second evaluation metric.

In some embodiments, the language model is a first language model, wherein the generating a data pipeline based on the use case comprises generating the data pipeline using a data pipeline builder including a second language model different from the first language model. In certain embodiments, the generating a first prompt based on the input dataset and a first prompt structure comprises: determining text data based on the input dataset; and filling in the one or more blanks using the determined text data. In some embodiments, the data schema includes one or more data field names and one or more data types, wherein the determining text data based on the input dataset comprises extracting at least one of the one or more data field names and a corresponding data type from the input dataset. In certain embodiments, the data pipeline generated based on the use case uses a subset of the input dataset. In some embodiments, the receiving an input dataset comprises receiving a selection of the input dataset from one or more input datasets.

In certain embodiments, the method includes: receiving at least one input selected from a group consisting of: one or more queries, one or more input datasets, and one or more target datasets; generating a model query based on the at least one input; and generating a query execution plan based at least in part on the model query, and the generating a data pipeline based on the use case comprises: generating the data pipeline based at least in part on the query execution plan. In some embodiments, the method includes: generating, using one or more computational models, a model result based on the model query; generating a confidence score associated with the model result; determining whether the confidence score is higher than a predetermined threshold; in response to determining that the confidence score is higher than the predetermined threshold, generating the query execution plan; in response to determining that the confidence score is lower than the predetermined threshold, generating one or more second queries; and wherein the generating a model query includes generating the model query based on the one or more second queries. In certain embodiments, the language model includes a large language model.

According to some embodiments, a system for data pipeline evaluations comprises one or more memories having instructions stored therein and one or more processors configured to execute the instructions and perform operations. The operations comprise: receiving an input dataset, the input dataset including a data schema; generating a first prompt based on the input dataset and a first prompt structure having one or more text strings and one or more blanks; providing the first prompt to a language model; receiving a use case generated by the language model for the input dataset, the use case including a description of how to use the input dataset; generating a data pipeline based on the use case; and applying the data pipeline to the input dataset to generate an output dataset. For example, the system is implemented according to at least FIG. 2, and/or FIG. 4.

In certain embodiments, the operations further comprise: generating a second prompt based on a second prompt structure, the second prompt structure associated with the use case and the output dataset; providing the second prompt to the language model; receiving an evaluation function generated by the language model; and determining an evaluation metric using the evaluation function based on the use case and the output dataset. In some embodiments, the second prompt structure includes one or more second text strings and one or more second blanks, and in the operations, the generating a second prompt based on a second prompt structure includes: determining second text data based on the use case; and filling in the one or more second blanks using the determined second text data.

In certain embodiments, the operations further comprise: generating a second prompt based on the input dataset, the first prompt structure, the use case, and the evaluation metric; providing the second prompt to the language model; receiving a second use case generated by the language model for the input dataset; and generating a second data pipeline based on the second use case. In some embodiments, the use case is a first use case, the output dataset is a first output dataset, and the data pipeline is a first data pipeline; and the operations further comprise: receiving a second use case generated by the language model for the input dataset, the second use case including a second description of how to use the input dataset; generating a second data pipeline based on the second use case; and applying the second data pipeline to the input dataset to generate a second output dataset.

According to certain embodiments, a method for data pipeline evaluations comprises: receiving an input dataset, the input dataset including a data schema; generating a first prompt based on the input dataset and a first prompt structure having one or more text strings and one or more blanks; providing the first prompt to a language model; receiving a use case generated by the language model for the input dataset, the use case including a description of how to use the input dataset; generating a data pipeline based on the use case; applying the data pipeline to the input dataset to generate an output dataset; generating a second prompt based on a second prompt structure, the second prompt structure associated with the use case and the output dataset; providing the second prompt to the language model; receiving an evaluation function generated by the language model; and determining an evaluation metric using the evaluation function based on the use case and the output dataset. The generating a first prompt based on the input dataset and a first prompt structure comprises: determining text data based on the input dataset; and filling in the one or more blanks using the determined text data. The data schema includes one or more data field names and one or more data types; determining text data based on the input dataset comprises extracting at least one of the one or more data field names and a corresponding data type from the input dataset; and the method is performed using one or more processors. For example, the method is implemented according to at least FIG. 1, and/or FIG. 3. According to some embodiments, the language model is a first language model, wherein the generating a data pipeline based on the use case comprises generating the data pipeline using a data pipeline builder including a second language model different from the first language model. In certain embodiments, the language model includes a large language model.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments.

## Claims

1. A computer-implemented method for data pipeline evaluations, the method comprising:
receiving an input dataset, the input dataset including a data schema;
generating a first prompt based on the input dataset and a first prompt structure having one or more text strings and one or more blanks;
providing the first prompt to a language model;
receiving a use case generated by the language model for the input dataset, the use case including a description of how to use the input dataset;
generating a data pipeline based on the use case; and
applying the data pipeline to the input dataset to generate an output dataset.

2. The method of claim 1, further comprising:
generating a second prompt based on a second prompt structure, the second prompt structure associated with the use case and the output dataset;
providing the second prompt to the language model;
receiving an evaluation function generated by the language model; and
determining an evaluation metric using the evaluation function based on the use case and the output dataset.

3. The method of claim 2, wherein the second prompt structure includes one or more second text strings and one or more second blanks, wherein the generating a second prompt based on a second prompt structure comprises:
determining second text data based on the use case; and
filling in the one or more second blanks using the determined second text data.

4. The method of claim 1, further comprising:
generating a second prompt based on the input dataset, the first prompt structure, the use case, and the evaluation metric;
providing the second prompt to the language model;
receiving a second use case generated by the language model for the input dataset; and
generating a second data pipeline based on the second use case.

5. The method of claim 2, wherein the use case is a first use case, the output dataset is a first output dataset, and the data pipeline is a first data pipeline, wherein the method further comprises:
receiving a second use case generated by the language model for the input dataset, the second use case including a second description of how to use the input dataset;
generating a second data pipeline based on the second use case; and
applying the second data pipeline to the input dataset to generate a second output dataset.

6. The method of claim 5, wherein the evaluation function is a first evaluation function and the evaluation metric is a first evaluation metric, wherein the method further comprises:
generating a third prompt based on the second prompt structure, the second use case, and the second output dataset;
providing the second prompt to the language model;
receiving a second evaluation function generated by the language model;
determining a second evaluation metric using the second evaluation function based on the second use case and the second output dataset; and
selecting a use case from the first use case and the second use case based on the first evaluation metric and the second evaluation metric.

7. The method of any preceding claim, wherein the language model is a first language model, wherein the generating a data pipeline based on the use case comprises generating the data pipeline using a data pipeline builder including a second language model different from the first language model.

8. The method of any preceding claim, wherein the generating a first prompt based on the input dataset and a first prompt structure comprises:
determining text data based on the input dataset; and
filling in the one or more blanks using the determined text data;
wherein the data schema includes one or more data field names and one or more data types;
wherein the determining text data based on the input dataset comprises extracting at least one of the one or more data field names and a corresponding data type from the input dataset.

9. The method of any preceding claim, wherein the data pipeline generated based on the use case uses a subset of the input dataset.

10. The method of any preceding claim, wherein the receiving an input dataset comprises receiving a selection of the input dataset from one or more input datasets.

11. The method of any preceding claim, further comprising:
receiving at least one input selected from a group consisting of: one or more queries, one or more input datasets, and one or more target datasets;
generating a model query based on the at least one input;
generating a query execution plan based at least in part on the model query; wherein the generating a data pipeline based on the use case comprises:
generating the data pipeline based at least in part on the query execution plan.

12. The method of claim 11, further comprising:
generating, using one or more computational models, a model result based on the model query;
generating a confidence score associated with the model result;
determining whether the confidence score is higher than a predetermined threshold;
in response to determining that the confidence score is higher than the predetermined threshold, generating the query execution plan;
in response to determining that the confidence score is lower than the predetermined threshold, generating one or more second queries; and
wherein the generating a model query includes generating the model query based on the one or more second queries.

13. The method of any preceding claim, wherein the language model includes a large language model.

14. The method of claim 1 or claim 7, comprising:
generating a second prompt based on a second prompt structure, the second prompt structure associated with the use case and the output dataset;
providing the second prompt to the language model;
receiving an evaluation function generated by the language model; and
determining an evaluation metric using the evaluation function based on the use case and the output dataset;
wherein the generating a first prompt based on the input dataset and a first prompt structure comprises:
determining text data based on the input dataset; and
filling in the one or more blanks using the determined text data;
wherein the data schema includes one or more data field names and one or more data types;
wherein determining text data based on the input dataset comprises extracting at least one of the one or more data field names and a corresponding data type from the input dataset;
wherein the method is performed using one or more processors.

15. A system for data pipeline evaluations, the system comprising:
one or more memories having instructions stored therein; and
one or more processors configured to execute the instructions and perform the method of any preceding claim.
